# EUROPEAN PATENT SPECIFICATION

(11) **EP 1 978 002 B1**
(45) Date of publication and mention of the grant of the patent: **01.08.2012**
(21) Application number: 08005795.3
(22) Date of filing: 27.03.2008
(51) Int. Cl.: C03B 37/012

(54) **Method and apparatus for manufacturing an optical fiber preform.**
Verfahren und Vorrichtung zur Herstellung einer Glasfaservorform
Procédé et appareil de fabrication d'une préforme pour fibre optique

(30) Priority: 27.03.2007 FR 0702226
(43) Date of publication of application: 08.10.2008
(73) Proprietor: Draka Comteq B.V., 1083 HJ Amsterdam (NL)
(72) Inventor: Petitfrère, Emmanuel, 59650 Villeneuve d'ascq (FR); Calvo, Laurent, 62220 Carvin (FR)
(74) Representative: op den Brouw-Sprakel, Vera Stefanie Irene

(56) References cited:
- EP-A- 1 801 080
- FR-A- 2 647 778
- FR-A- 2 760 449
- JP-A- 2005 350 328
- US-A- 4 317 667

## Description

The present invention concerns a method for manufacturing an optical fiber preform.

An optical fiber is made by drawing a preform on a drawing tower. A preform generally comprises a primary preform consisting of a silica tube in pure or doped silica in which doped and/or pure silica layers have successively been deposited to form an inner cladding and a central optical core of the optical fiber, This primary preform is then overcladded or sleeved to increase its diameter and to form a final preform which can be used on a drawing tower. In this context, the term inner cladding is used for the optical cladding formed inside the silica tube, and outer cladding for the optical cladding formed on the outside of the silica tube. The homothetic optical fiber drawing operation consists of placing the preform vertically in a tower and drawing an optical fiber strand from one end of the preform. For this purpose, a high temperature is locally applied to one end of the preform until the silica softens, the optical fiber drawing speed and temperature then being permanently controlled during the drawing operation, since they determine the diameter of the optical fiber.

An optical fiber conventionally consists of an optical core whose function is to transmit and optionally amplify an optical signal, and of an optical cladding whose function is to confine the optical signal within the optical core. For this purpose, the refractive indexes of the optical core n_{c} and the optical cladding nₒ are such that n_{c}>n_{g}. As is well known, the propagation of an optical signal in a single mode optical fiber decomposes into a fundamental mode guided in the optical core, and into secondary modes also called cladding modes guided over a certain distance in the optical core-optical cladding assembly.

The deposits in the silica tube of the primary preform are of "Chemical Vapour Deposition" type - CVD. This type of deposit In performed by injecting gaseous mixtures Into the silica tube and ionising said mixtures. CVD-type deposit encompasses MCVD (Modified Chemical Vapour Deposition), FCVD (Furnace Chemical Vapour Deposition) and PCVD (Plasma enhanced Chemical Vapour Deposition).

After depositing the layers corresponding to the optical core and to the inner cladding, the silica tube Is closed on itself in a so called collapsing operation. The primary preform consisting of a silica rod is then obtained. This primary preform is then overcladded to increase the diameter, generally with natural silica grains for reasons of costs. The overcladding may be carried out by plasma deposition in which the natural silica grains are projected on the primary preform and fused with a plasma torch under a temperature of the order of 2,300° so as to be vitrified on the periphery of the primary preform to form an outer optical cladding. The primary preform is caused to rotate around its longitudinal axis and the plasma torch or the primary preform move longitudinally in translation with respect to each other In order to provide a uniform silica deposit on the whole periphery of the primary preform. The overcladding operation is generally carried out in a closed cabin with a controlled atmosphere so as to provide protection against electromagnetic perturbations and the evolvement of ozone emitted by the plasma torch.

The overcladding by plasma deposit of silica grain may be low cost, but It produces impurities which are deposited on the periphery of the primary preform. These impurities such as water or particles of dust derive from the ambient air of the cabin in which the overcladding operation is conducted. In particular, during the overcladding operation, the silica is brought to its vitrification temperature by the plasma torch; the silica is then present in a transition state tending to promote the absorption of OH-group impurities from water. The presence of impurities in the outer cladding - formed by the overcladding - deteriorates the optical properties of the optical fiber, in particular when impurities are present in the first layers of silica deposited on the primary preform. This problem of impurities incorporated in the overcladding increases with an increase in the width of the central optical core of the primary perform. With a large-diameter central optical core, the inner cladding has a limited thickness and the impurities Incorporated in the periphery of the silica tube during the overcladding have an Influence on the signal propagation in the central optical core that is greater the closer they lie to the optical core. The diameter of the primary preform consists of the diameter of the optical core and the width of the inner cladding. The diameter of the final preform is the diameter of the primary preform plus the width of the overcladding, being the width of the outer optical cladding. The ratio of the diameter of the optical core and the width of the (inner + outer) optical cladding should be kept constant. If the diameter of the final preform is to be enlarged both the diameter of the optical core as well as the width of the optical cladding is to be increased. If the diameter of the primary preform is to be maintained, this can only be achieved by decreasing the width of the inner cladding while increase the width of the outer cladding, By this decrease In the width of the inner cladding, the outer cladding comes closer to the optical core and any impurities in the outer cladding may Influence the optical core, especially any impurities in first layers of the outer cladding in contact to the inner cladding.

It is sought to manufacture large capacity preforms. The capacity of a preform is defined as the quantity of optical fiber length which can be drawn from this preform. The greater the diameter of the preform, the greater its capacity. To reduce manufacturing costs and to limit the connection losses which are inherent when optical fibres are to be connected to each other, it is desirable to provide long lengths of linear optical fibres from one and the same preform. It Is therefore sought to fabricate large diameter preforms while respecting the relative dimensional constraints between the diameter of the central optical core and the diameter of the optical cladding (inner + outer cladding). The final preform, after overcladding, must have the same optical core diameter/optical cladding diameter ratios as the drawn optical fiber. To manufacture a large capacity preform, it is generally chosen to increase the quantity of overc/adding rather instead of increasing the diameter of the primary preform which is costly to produce. In order to be able to increase the quantity of overcladding while keeping the ratio of the optical core over optical cladding the same it is required that the optical core, which is formed by deposition inside the silica tube, Is enlarged. This means that the width of the inner cladding is decreased In order to keep the diameter of the primary preform the same.

US 2002/0144521 describes a method for manufacturing a large capacity preform. In order to solve the problem regarding impurities mentioned above, this document proposes making a primary preform by depositing a large diameter central optical core inside a silica tube doped with Chlorine and Fluorine The silica tube is doped with Fluorine to compensate for the increase in the refractive index generated by the doping with Chlorine, The silica tube is doped with Chlorine to limit the migration of OH-group impurities which deteriorates the optical transmission properties in the central optical core. The use of such a silica tube doped with Chlorine and Fluorine makes it possible, for a silica tube of equivalent diameter, to reduce the thickness of the inner cladding deposited in the silica tube in order to fabricate a primary perform having an enlarged central optical core diameter, This primary perform is then overcladded by plasma deposition to obtain a final preform of large diameter and hence of large capacity, The silica tube doped with Chlorine and Fluorine protects the central optical core against impurities brought by the overcladding process using natural silica grain.

However, this method requires the use of a specific silica tube, more costly than a pure silica tube. Also, the presence of Chlorine in the silica tube does not prevent the formation of Si-OH bonds on the silica tube surface during the overcladding.

FR-A-2 760 449 describes a method for depositing silica on an optical fiber primary preform. This document proposes purifying the deposit of natural silica during the overcladding operation. A supply duct supplies a gaseous mixture containing Chlorine or Fluorine in the vicinity of the plasma torch to cause the alkaline elements or alkaline-earth elements contained in the silica grain to react, in order to reduce the formation of OH-groups in the overcladding formed on the primary preform.

It was ascertained by the present inventors however that it is not at the area covered by the plasma torch - being the portion of the preform that is heated by the plasma torch - that impurities are incorporated in the overcladding silica since the temperature, approximately 2300°C, is too high to promote the formation of bonds with the OH-groups. The impurities are especially deposited in the silica that has just been vitrified on the surface of the silica tube and before it has cooled. The addition of a gaseous mixture containing Chlorine or Fluorine on the preform area directly heated by the plasma torch does not therefore sufficiently reduce the formation of impurities in the overcladding silica.

FR-A-Z.647 778 describes a method and device for depositing silica on an optical fiber primary preform. The silica rod forming the primary preform is placed on a glass working lathe In a sealed chamber separated from the ambient atmosphere and supplied with dried gas. The overcladding operation is conducted In this chamber. The air in the chamber is successively subjected to a filtration, a compression and refrigeration, to purging with condensed water then to a final desiccation by adsorption. With such a procedure it is theoretically possible to suppress most of the impurities which are likely to be incorporated In the overcladding silica. However, said solution is complex and costly to implement. The volume of the chamber must be at least 8 to 10 m³ and requires an airflow rate through the chamber of around 3000 m³/h. Subjecting such an air volume to the above-cited filtering and drying operations represents a very high implementation expense incompatible with manufacturing costs for optical fibers.

There is therefore a need for a method for manufacturing an optical fiber preform allowing the overcladding operation to be conducted at low cost, whilst limiting to a maximum the incorporation of Impurities in the overcladding silica.

JP 2005-350328 discloses a process for flame polishing a core rod in an oxyhydrogen flame during manufacturing of an optical fiber preform.

JP 07-144928 discloses an optical fiber preform producing device to produce a thermophoresis effect and Increase the sooth deposition rate.

On 23 December 2405 the applicant filed a French patent application under number FR 05 13 254, titled Method for Manufacturing an Optical Fiber Preform and published as FR 2 895 396. This patent application describes a manufacturing method in which the primary preform is positioned in a silica tube delimiting a control volume of reduced size around the overcladding area. The atmosphere is therefore controlled solely in this reduced volume delimited by the silica tube, and not in the entire volume of a chamber containing the glass working lathe.

The present invention proposes another solution by the overcladding of the primary preform while coaling at least one zone of the preform adjacent to the zone covered by the plasma torch. With "zone" is meant a portion or area around the periphery of the preform. The silica grain projected for the overcladding nonetheless reach their vitrification temperature since they are projected into the flame of the plasma torch while the preform itself is cooled just beside the torch, in particular on a zone downstream of the deposit of silica grain, in order to limit the absorption of OH-group impurities by the silica.

More particularly, the invention proposes as method for manufacturing an optical fiber final preform according to claim 1. By "zone covered by the plasma torch" is meant a portion or area around the periphery of the preform which is being heated by the plasma torch and onto which the silica grain is being projected.

According to embodlments, the method of the invention has one or more of the following characteristics:
two cooling nozzles blow gas onto preform zones on either side of the zone covered by the plasma torch;
said at least one cooling nozzle blows air;
said at least one cooling nozzle blows nitrogen;
the gas blown by said at least one cooling nozzle has a relative humidity value of less than 10% and preferably less than 5% at 20°C;
said gas is blown onto the preform at a temperature of between 20 and 25°C;
the gas blown by said at least one cooling nozzle includes fluorinated and/or chlorinated gases;
said at least one cooling nozzle blows gas at a rate of more than 75 l/min, preferably more than 100 l/min, especially equal to or higher than 150 l/min, and more preferably equal to or higher than 200 l/min;
said at least one cooling nozzle is positioned at a radial distance of between 15 mm and 60 mm from the periphery (outer circumference) of the preform being overcladded;
said at least one cooling nozzle is positioned at a longitudinal distance of between 46 mm and 90 mm from the axis of the plasma torch;
sold at least one cooling nozzle is positioned at a longitudinal distance of between 3 mm and 60 mm from the side ot the plasma torch.

The invention also proposes an apparatus for manufacturing an optical fiber final preform according to claim 11.

According to the embodiments, the apparatus of the invention has one or more of the following characteristics ;
two cooling nozzles adapted to blow gas on either side of the overcladding device of the primary preform;
means to control the flow rate of the gas blown by said at least one cooling nozzle, such as mass flow controllers or other types of flow meters;
means to control the radial distance between said at least one cooling nozzle end the periphery of the primary preform, being standard measurement tools, for example rulers or a measurement tape;
means to control the longitudinal distance between said at least one cooling nozzle and the overcladding device of the primary preform, such as standard measurement tools, for example rulers or a measurement tape;
means to move either the primary preform or the overcladding device along the longitudinal axis of the primary preform in translation with respect to each other being a glass working lathe movable in translation using for example a motor and a spindle;
the overcladding device comprises a plasma torch and a duct supplying silica grain.

The invention also concerns an optical fiber drawn from an optical fiber preform obtained using the method of manufacture of the invention.

Other characteristics and advantages of the invention will become apparent on reading the following detailed description of embodiments of the invention given solely as examples and with reference to the figures which show:
figure 1, a schematic of elements used to implement the method of the invention;
figure 2, a diagram of an optical fiber preform In which sections are cut for measurement of OH-group concentration in the overcladding silica;
figure 3, a graph in which the cumulative OH-group concentration is plotted against the preform diameter for a reference preform not according to the invention and two preforms prepared according to the method of the invention.

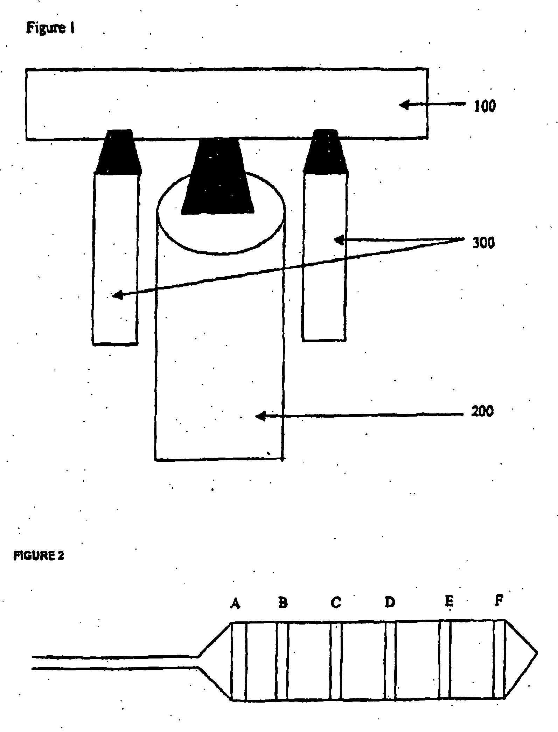

Figure 1 shows a primary preform 100 intended to be placed on a glass working lathe to be overcladded so as to form a final preform which can be used on an optical fiber drawing tower. The primary preform 100 is a rod of highly pure silica, manufactured according to any known technique e.g. PCVD deposit in a silica tube.

The overcladding can be conducted by plasma deposit of silica grain, preferably low-cost natural silica grain. The silica grain projected for overcladding may also be doped depending upon the intended applications of the optical fiber. As it is known *per se*, a duct feeding silica grain (not illustrated) is provided in the vicinity of the plasma torch 200. Either the assembly consisting of a plasma torch 200 and duct supplying silica grain is moved in a back and forth movement along the rotating primary preform 100, or the rotating primary preform 100 slides in a longitudinal back and forth movement in front of the plasma torch 200 and the duct supplying silica grain. In addition, both the rotating primary preform 100 and the plasma torch 200 may be moved with respect to each other.

According to the invention, at least one cooling nozzle 300 is provided. Said cooling nozzle 300 is adapted to blow gas onto a zone of the preform adjacent the zone covered - heated directly - by the plasma torch 200. As indicated above, the absorption of OH-group impurities in the silica is promoted by the transition state of the silica during vitrification. The inventor found that if the temperature of the silica which has just been vitrified is brought to below a threshold temperature of about 1300°C the absorption of OH impurities can be largely reduced.

The invention therefore proposes cooling the preform around and at least downstream of the plasma torch 200 as overcladding progresses, by blowing gas just beside the plasma torch 200. In figure 1, two cooling nozzles 300 are illustrated on either side of the plasma torch 200, which further limits the risk of impurities being, absorbed in the silica heated by the plasma torch 200; evidently a single cooling nozzle 300 could be sufficient if it can be piloted so that it can be positioned downstream of the plasma torch 200 on each overcladding pass, or the two cooling nozzles 300 could operate alternately. It is sought to cool the preform 100 In a downstream zone adjacent to the zone covered by the plasma torch 200. The term "downstream" here is meant with respect to the movement of the plasma torch 200 along the preform i.e. the zone cooled by the cooling nozzle 300 is the zone on which silica grain has just been vitrified, by the plasma torch 200. The "downstream" zone of the plasma torch 200 therefore alternates on each overcladding pass since the plasma torch 200 performs a back and forth movement along the preform.

The cooling nozzles 300 may move with the plasma torch 200 if this plasma torch 200 moves along the rotating preform. The cooling nozzles 300 move radially with respect to the preform to adjust their position relative to the periphery of the preform being overcladded. In particular, as the overcladding progresses, the cooling nozzles 300 must be moved away so as not to come up against the preform which enlarges with overcladding. This can for example, be carried out by moving the lathe up or down The cooling nozzles 300 may be integrated on a base common with the overcladding device consisting of the plasma torch 200 and the duct supplying silica grain. The cooling nozzles 300 may be held at a given radial distance away from the periphery of the perform being overcladded, e.g. at a radial distance of between 15 and 60 mm. This radial distance was found to give an optimal result of cooling without disturbing the overcladding. The glass working lathe can be moved upwards and downwards during the overcladding process in order to keep the desired radial distance. The cooling nozzles 300 may be kept at a given longitudinal distance away from the flame of the plasma torch 200, e.g. at a longitudinal distance of between 45 and 90 mm from the axis of the plasma torch 200. The cooling nozzle(s) 300 is (are) preferably located at a longitudinal distance of between 3 mm and 50 mm away from the side of the plasma torch 200, The plasma torch 200 may for example have a radius of approximately 30-80 mm, preferably 42 mm,

Tanks of pressurized air or nitrogen may be connected to the cooling nozzles 300. The gases are preferably the same as the gases used for the plasma torch 200. The gases stored for the cooling nozzles 300 have a relative humidity value of less than 10 %, preferably less than 5% at 20°C and can be mixed with fluorinated and/or chlorinated gases to inhibit any formation of OH-groups in the vicinity of the plasma torch 200 and to prevent Si-OH bonds on the surface of the preform around the plasma torch 200. It is preferred to blow nitrogen rather than air to avoid the creation of NOx groups (greenhouse gas), although the blowing of air also gives satisfactory results regarding the limitation of impurities deposited In the overcladding. The gas blown by the cooling nozzles 300 is for example at ambient temperature i.e. around 200C to 25°C. However, also cooler or warmer gases can be used as long as a cooling of the preform is effected. This gas cools the preform whose temperature is brought to over 2000°C by the plasma torch 200. The silica is therefore preferably rapidly cooled after vitrification and preferably only remains a very short time in a transition state promoting the absorption of OH-group impurities; in order to reduce the absorption of these impurities.

With the method of the invention, the presence of OH-groups in the silica overcladding can be substantially reduced. Measurements of OH-group concentrations were performed on several sections of different optical fiber preforms. Figure 2 gives a diagram of an optical fiber preform on which sections have been cut. The positions referenced « A » and « F » correspond to weld points of the preform onto the glass working lathe support. Six positions are shown, spaced apart by approximately 100 mm for a preform of approximate length of 500 mm, The OH-group concentration can be measured in each section, e.g. using an infrared spectroscopy technique.

The table below gives the mean concentration of OH-groups in different sections of the overcladding for different preforms, as measured between diameters 34 mm and 92 mm. The measurements of OH-group concentrations given in the table therefore correspond to concentrations of OH-groups in the overcladding; the primary preform is 33 mm in diameter and the final preform 93 mm in diameter. The table gives a mean measurement of the OH-group concentration for a preform diameter of strictly less than 50 mm (measurements made between the diameters 34 and 49,99) and for a preform diameter of 50 mm or over. This division is arbitrary and taken only to show the importance of a low level of OH-group impurities near the Inner cladding the preforms 500. mm long were cut at regular Intervals (as shown figure 2) to measure the radial concentration of OH-group Impurities in the overcladding. The table below therefore gives these mean OH-group concentrations in the overcladding for a reference preform and for two preforms obtained using the method of the invention for the different sections B to E.

**Table**

| | Reference Preform | | Preform I | | Preform II | |
|---|---|---|---|---|---|---|
| | [OH]ₘₑₐₙ | [OH]ₘₑₐₙ | [OH]ₘₑₐₙ | [OH]ₘₑₐₙ | [OH]ₘₑₐₙ | [OH]ₘₑₐₙ |
| | ≤ 50 mm | > 50 mm | ≤ 50 mm | >50mm | ≤ 50 mm | > 50 mm |
| Pos. B | 3.01 | 8.85 | 0.27 | 4.18 | 0.44 | 3.68 |
| Pos. C | 3.20 | 8.19 | 0.36 | 3.47 | 0.44 | 3.66 |
| Pos. D | 3.13 | 10.01 | 0.48 | 3.61 | 0.44 | 3.74 |
| Pos. E | 2.93 | 7.49 | 0.43 | 3.34 | 0.82 | 3.79 |

The reference preform was overcladded according to a prior art method I.e. overcladded by projecting silica grain vitrified onto the preform using a plasma torch in a 200 chamber under controlled atmosphere.

The preform 1 was overcladded using the method of the invention i.e, by projecting silica grain vitrified onto the preform using a plasma torch 200 and cooling of the preform just beside the plasma torch 200. To fabricate preform 1, two cooling nozzles 300 were used to blow nitrogen on either side of the plasma torch 200 at a flow rate of 150 I/min; the cooling nozzles 300 were positioned 10 mm away from the edge of the plasma torch 200, i.e. approximately 60 mm away from the axis of the plasma torch 200 and 25 mm away from the periphery of the preform during the overcladding operation.

Preform II was overcladded using the method of the invention I.e. overcladded by projecting silica grain vitrified onto the preform using a plasma torch 200, with cooling of the preform just beside the plasma torch 200. To fabricate preform II, two cooling nozzles 300 were used to blow nitrogen on either side of the plasma torch 200 at a flow rate of 200 I/min; the cooling nozzles 300 were positioned 10 mm away from the edge of the plasma torch 200 i.e. approximately 60 mm away from the axis of the plasma torch 200 and 25 mm away from the periphery of the preform during the overcladding operation,

It was found that the mean concentration of OH-groups in the silica overcladding close to the optical core, i.e. in the overcladding up to a diameter of strictly less than 50 mm, was between 2.93 and 3.20 for the reference perform; while for preform I of the invention this mean concentration ranged from 0.27 to 0.48, and for preform 11 according to the invention, this mean concentration ranged from 0.44 to 0,52. The reduction of OH-group impurities in the first overcladding layers is therefore notable using the method of the invention, with a concentration around six times less in the preforms of the invention compared with the reference preform. The reduction of impurities in the first overcladding layers is essential to reduce the risk of migration of these impurities towards the optical core of the optical fiber.

In addition, the mean concentration of OH-groups in the silica-overcladding beyond a diameter of 50 mm is also improved with the method of the invention. The mean concentration of OH-groups lies between 7.49 and 10,01 for the reference preform; whereas for preform I according to the invention, this mean concentration lies between 3.34 and 4,18, and for perform II according to the invention this mean concentration Iles between 3.66 and 3.79,

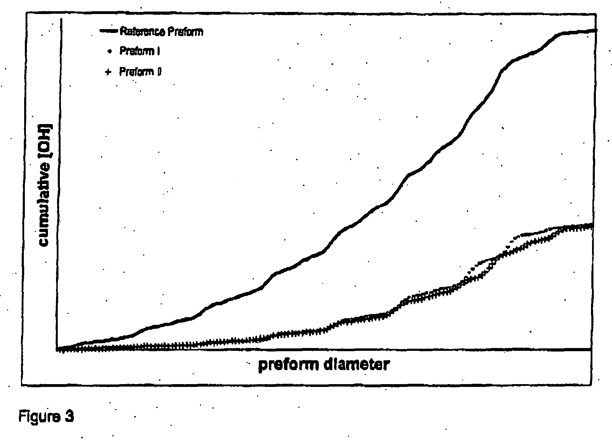

Figure 3 is a graph plotting the cumulative OH-group concentration as a function of the diameter of the preform, as measured between diameters 34 and 92 mm. The solid trace gives the cumulative OH-group concentration as measured for the Reference Preform, the - trace for Preform I and the + trace for Preform II,

It will be noted from the Table and Figure 3 that the OH-group concentration in the silica overcladding was substantially reduced In the preforms (I+II) of the present invention compared with the reference preform. It will also be noted from the Table that Preform II showed a more regular mean OH-group concentration than Preform I; i.e. a smaller difference between the mean concentrations of the different sections measured. A faster flow rate of gas directed onto the preform zones adjacent to the plasma torch 200 provides more uniform cooling of the preform.

The method of the invention can be implemented with a relatively simple apparatus. A conventional glass working lathe can be used as support to receive the primary preform 100. A conventional type plasma torch 200 with a duct supplying silica grain can also be provided. At least one cooling nozzle 300 is also provided. The cooling nozzle 300 may be integrated on a support common with the plasma torch 2t70 or may be installed next to It and commanded separately.

The apparatus also comprises means for controlling the radial distance between the cooling nozzle 300 and the periphery of the preform being overcladded. The apparatus may also comprise means for controlling the flow rate of the cooling nozzle(s) 300 and means for controlling the position of the cooling nozzle(s) 300, in particular to control the longitudinal distance from the plasma torch 200 If the cooling nozzle 300 is not integrated on a common support with the plasma torch 200.

The method and apparatus of the invention can be used for overcladding an optical fiber primary preform to obtain a final preform ready for drawing. This overcladding step can be conducted in a room with no atmosphere control which limits installation costs. It was found by the applicant that simply cooling the zones of the preform adjacent the plasma torch 200 is sufficient to limit the incorporation of OH-group impurities in the overcladding.

The overcladding operation of a primary preform can therefore be performed using a simple, low-cost apparatus enabling efficient reduction of impurities incorporated in the overcladding silica. An optical fiber having improved transmission properties can therefore be drawn from a final preform obtained using the method of the invention.

## Claims

1. Method for manufacturing an optical fiber final preform which comprises a step of providing a primary preform (100) and a step of overcladding the primary preform by projecting silica grain under a plasma torch (200), wherein either the primary preform (100) or the plasma torch (200) move in translation along the longitudinal axis of the primary preform (100) with respect to each other, wherein at least one zone of the preform downstream of the plasma torch (200), being a zone of the preform on which silica grain has just been vitrified during the step of overcladding, is cooled to a temperature below 1300 °C during the overcladding by at least one cooling nozzle (300) blowing gas.

2. The manufacturing method according to claim 1, wherein one cooling nozzle (300) blows gas onto a zone of the preform downstream of the plasma torch (200), being a zone of the preform onto which silica grain has been just vitrified during the step of overcladding.

3. The manufacturing method according to claim 1, wherein two cooling nozzles (300) blow gas onto the preform on either side of zone covered by the plasma torch (200).

4. The manufacturing method according to any of claims 1 - 3, wherein said at least one cooling nozzle (300) blows air.

5. The manufacturing method according to any of claims 1 - 3, wherein said at least one cooling nozzle (300) blows nitrogen.

6. The manufacturing method according to any of claims 1 - 5, wherein the gas blown by said at least one cooling nozzle (300) has a relative humidity value of less than 5% at 20 °C.

7. The manufacturing method according to any of claims 1 - 6, wherein the gas blown by said at least one cooling nozzle (300) includes fluorinated and/or chlorinated gases.

8. The manufacturing method according to any of claims 1 - 7, wherein said at least one cooling nozzle (300) blows gas at a flow rate of more than 75 l/min, preferably more than 100 l/min, especialy equal to or higher than 150 l/min. and more preferably equal to or higher than 200 l/min.

9. The manufacturing method according to any of claims 1 - 8, wherein said at least one cooling nozzle (300) is positioned at a radial distance of between 15 mm and 60 mm from the periphery of the preform being overcladded.

10. The manufacturing method according to any of claims 1 - 9, wherein said at least one cooling nozzle (300) is positioned at a longitudinal distance of between 45 mm and 90 mm from the axis of the plasma torch (200).

11. Apparatus for manufacturing an optical fiber final preform comprising:
- a support to receive a primary preform;
- a device for overcladding the primary preform;
- at least one cooling nozzle (300) adapted to blow gas onto a zone of the preform adjacent the zone covered by the overcladding device of the primary preform;
- means to move either the primary preform or the overcladding device in translation along the longitudinal axis of the primary preform with respect to each other; and
- means to control the radial distance between said at least one cooling nozzle (300) and the periphery of the primary preform.

12. The apparatus according to claim 11, comprising two cooling nozzles (300) adapted to blow gas on either side of the overcladding device.

13. The apparatus according to claim 11 or 12, further comprising means to control the flow rate of the gas blown by said at least one cooling nozzle (300).

14. The apparatus according to any of claims 11 - 13, also comprising means to control the longitudinal distance between said at least one cooling nozzle (300) and the overcladding device of the primary preform.

15. The apparatus according to any of claims 11 - 14, wherein the overcladding device comprises a plasma torch (200) and a duct supplying silica grain.

## Patentansprüche

1. Verfahren zur Herstellung einer endgültigen Lichtleitfaser-Vorform, das einen Schritt, bei dem eine primäre Vorform (100) bereitgestellt wird, und einen Schritt umfasst, bei dem die primäre Vorform durch Ausschleudern von Siliciumdioxidkorn unter einem Plasmabrenner (200) ummantelt wird, wobei entweder die primäre Vorform (100) oder der Plasmabrenner (200) entlang der Längsachse der primären Vorform (100) relativ zueinander translatorisch bewegt werden, wobei wenigstens ein Bereich der Vorform stromabwärts des Plasmabrenners (200), der ein Bereich der Vorform ist, auf dem Siliciumdioxidkorn während des Ummantelungsschrittes soeben vitrifiziert worden ist, während der Ummantelung auf eine Temperatur unterhalb 1300°C abgekühlt wird, indem wenigstens eine Kühldüse (300) Gas bläst.

2. Herstellungsverfahren nach Anspruch 1, bei dem eine Kühldüse (300) Gas auf einen Bereich der Vorform stromabwärts des Plasmabrenners (200) bläst, der ein Bereich der Vorform ist, auf dem Siliciumdioxidkorn während des Ummantelungsschrittes soeben vitrifiziert worden ist.

3. Herstellungsverfahren nach Anspruch 1, bei dem zwei Kühldüsen (300) auf beiden Seiten des von dem Plasmabrenner (200) abgedeckten Bereichs Gas auf die Vorform blasen.

4. Herstellungsverfahren nach einem der Ansprüche 1 bis 3, bei dem die wenigstens eine Kühldüse (300) Luft bläst.

5. Herstellungsverfahren nach einem der Ansprüche 1 bis 3, bei dem die wenigstens eine Kühldüse (300) Stickstoff bläst.

6. Herstellungsverfahren nach einem der Ansprüche 1 bis 5, bei dem das Gas, das von der wenigstens einen Kühldüse (300) geblasen wird, einen Wert relativer Feuchtigkeit von weniger als 5% bei 20°C hat.

7. Herstellungsverfahren nach einem der Ansprüche 1 bis 6, bei dem das Gas, das von der wenigstens einen Kühldüse (300) geblasen wird, fluorierte und/oder chlorierte Gase aufweist.

8. Herstellungsverfahren nach einem der Ansprüche 1 bis 7, bei dem die wenigstens eine Kühldüse (300) Gas mit einer Durchflussmenge von mehr als 75 l/min, vorzugsweise mehr als 100 l/min, insbesondere größer oder gleich 150 l/min und bevorzugter größer oder gleich 200 l/min bläst.

9. Herstellungsverfahren nach einem der Ansprüche 1 bis 8, bei dem die wenigstens eine Kühldüse (300) in einem radialen Abstand zwischen 15 mm und 60 mm vom Umfang der Vorform, die ummantelt wird, angeordnet ist.

10. Herstellungsverfahren nach einem der Ansprüche 1 bis 9, bei dem die wenigstens eine Kühldüse (300) in einem Längsabstand zwischen 45 mm und 90 mm von der Achse des Plasmabrenners (200) angeordnet ist.

11. Vorrichtung zur Herstellung einer endgültigen Lichtleitfaser-Vorform, mit:
- einer Halterung zur Aufnahme einer primären Vorform,
- einer Einrichtung zum Ummanteln der primären Vorform,
- wenigstens einer Kühldüse (300), die so eingerichtet ist, dass sie Gas auf einen Bereich der Vorform bläst, der an den von der Ummantelungseinrichtung der primären Vorform abgedeckten Bereich angrenzt,
- Mitteln zum Bewegen entweder der primären Vorform oder der Ummantelungseinrichtung entlang der Längsachse der primären Vorform translatorisch relativ zueinander, und
- Mitteln zur Steuerung des radialen Abstands zwischen der wenigstens einen Kühldüse (300) und dem Umfang der primären Vorform.

12. Vorrichtung nach Anspruch 11, mit zwei Kühldüsen (300), die so eingerichtet sind, dass sie auf beiden Seiten der Ummantelungseinrichtung Gas blasen.

13. Vorrichtung nach Anspruch 11 oder 12, die ferner Mittel zur Steuerung der Durchflussmenge des von der wenigstens einen Kühldüse (300) geblasenen Gases umfasst.

14. Vorrichtung nach einem der Ansprüche 11 bis 13, die auch Mittel zur Steuerung des Längsabstands zwischen der wenigstens einen Kühldüse (300) und der Ummantelungseinrichtung der primären Vorform umfasst.

15. Vorrichtung nach einem der Ansprüche 11 bis 14, bei der die Ummantelungseinrichtung einen Plasmabrenner (200) und ein Rohr umfasst, das Siliciumdioxidkorn zuführt.

## Revendications

1. Procédé de fabrication d'une préforme finale de fibre optique qui comprend une étape de fourniture d'une préforme primaire (100) et une étape de surplacage de la préforme primaire par projection de grains de silice sous une torche à plasma (200), dans lequel la préforme primaire (100) ou la torche à plasma (200) se déplace en translation le long de l'axe longitudinal de la préforme primaire (100) par rapport à l'autre, dans lequel au moins une zone de la préforme en aval de la torche à plasma (200), qui est une zone de la préforme sur laquelle des grains de silice viennent d'être vitrifiés pendant l'étape de surplacage, est refroidie à une température en dessous de 1 300 °C pendant le surplacage par au moins une buse de refroidissement (300) soufflant du gaz.

2. Procédé de fabrication selon la revendication 1, dans lequel au moins une buse de refroidissement (300) souffle du gaz sur une zone de la préforme en aval de la torche à plasma (200), qui est une zone de la préforme sur laquelle des grains de silice viennent d'être vitrifiés pendant l'étape de surplacage.

3. Procédé de fabrication selon la revendication 1, dans lequel deux buses de refroidissement (300) soufflent du gaz sur la préforme sur l'un ou l'autre côté de la zone couverte par la torche à plasma (200).

4. Procédé de fabrication selon l'une quelconque des revendications 1 à 3, dans lequel ladite au moins une buse de refroidissement (300) souffle de l'air.

5. Procédé de fabrication selon l'une quelconque des revendications 1 à 3, dans lequel ladite au moins une buse de refroidissement (300) souffle de l'azote.

6. Procédé de fabrication selon l'une quelconque des revendications 1 à 5, dans lequel le gaz soufflé par ladite au moins une buse de refroidissement (300) présente une valeur d'humidité relative inférieure à 5 % à 20 °C.

7. Procédé de fabrication selon l'une quelconque des revendications 1 à 6, dans lequel le gaz soufflé par ladite au moins une buse de refroidissement (300) comprend des gaz fluorés et/ou chlorés.

8. Procédé de fabrication selon l'une quelconque des revendications 1 à 7, dans lequel ladite au moins une buse de refroidissement (300) souffle du gaz à un débit supérieur à 75 L/min, de préférence supérieur à 100 L/min, spécialement égal ou supérieur à 150 L/min et de manière davantage préférée égal ou supérieur à 200 L/min.

9. Procédé de fabrication selon l'une quelconque des revendications 1 à 8, dans lequel ladite au moins une buse de refroidissement (300) est positionnée à une distance radiale comprise entre 15 mm et 60 mm de la périphérie de la préforme qui est surplaquée.

10. Procédé de fabrication selon l'une quelconque des revendications 1 à 9, dans lequel ladite au moins une buse de refroidissement (300) est positionnée à une distance longitudinale comprise entre 45 mm et 90 mm de l'axe de la torche à plasma (200).

11. Appareil permettant de fabriquer une préforme finale de fibre optique comprenant :
- un support pour recevoir une préforme primaire ;
- un dispositif de surplacage de la préforme primaire ;
- au moins une buse de refroidissement (300) adaptée pour souffler du gaz sur une zone de la préforme adjacente à la zone couverte par le dispositif de surplacage de la préforme primaire ;
- des moyens pour déplacer la préforme primaire ou le dispositif de surplacage en translation le long de l'axe longitudinal de la préforme primaire par rapport à l'autre ; et
- des moyens pour commander la distance radiale entre ladite au moins une buse de refroidissement (300) et la périphérie de la préforme primaire.

12. Appareil selon la revendication 11, comprenant deux buses de refroidissement (300) adaptées pour souffler du gaz sur un côté quelconque du dispositif de surplacage.

13. Appareil selon la revendication 11 ou 12, comprenant en outre des moyens pour commander le débit du gaz soufflé par ladite au moins une buse de refroidissement (100).

14. Appareil selon l'une quelconque des revendications 11 à 13, comprenant également des moyens pour commander la distance longitudinale entre ladite au moins une buse de refroidissement (300) et le dispositif de surplacage de la préforme primaire.

15. Appareil selon l'une quelconque des revendications 11 à 14, dans lequel le dispositif de surplacage comprend une torche à plasma (200) et un conduit fournissant des grains de silice.
